# FASCICULE DE BREVET EUROPEEN

(11) **EP 4 015 437 B1**
(45) Date de publication et mention de la délivrance du brevet: **01.04.2026**
(21) Numéro de dépôt: 21213684.0
(22) Date de dépôt: 10.12.2021
(51) Int. Cl.: B66C 13/46, B66C 23/88, B66C 23/90

(54) **DISPOSITIF DE LEVAGE ET DE MANUTENTION ÉQUIPÉ DE COMPOSANTS D'IDENTIFICATION POUR ÉTABLIR UNE CONFIGURATION ET UNE CARACTÉRISTIQUE DE FONCTIONNEMENT**
HEBE- UND FÖRDERVORRICHTUNG, DIE MIT IDENTIFIKATIONSKOMPONENTEN AUSGESTATTET IST, UM EINE KONFIGURATION UND EIN BETRIEBSVERHALTEN FESTZULEGEN
LIFTING AND HANDLING DEVICE PROVIDED WITH IDENTIFICATION COMPONENTS FOR ESTABLISHING A CONFIGURATION AND AN OPERATING CHARACTERISTIC

(30) Priorité: 16.12.2020 FR 2013329
(43) Date de publication de la demande: 22.06.2022
(73) Titulaire: Manitowoc Crane Group France, 69570 Dardilly (FR)
(72) Inventeur: RONI-DAMOND, Bruno, 69002 LYON (FR); BUCAS, Simon, 69002 Lyon (FR)
(74) Mandataire: Germain Maureau

(56) Documents cités:
- EP-A2- 1 724 230
- WO-A1-2021/028258
- DE-A1- 102012 025 111
- DE-A1- 102015 006 992
- DE-A1- 102015 016 856
- DE-A1- 102019 104 864
- US-A1- 2016 223 313

## Description

### [Domaine Technique de l'Invention]

La présente invention concerne un dispositif de levage et de manutention, comme par exemple une grue, comprenant des éléments structurels assemblés et des éléments de fonctionnement ainsi que des composants d'identification desdits éléments structurels et de fonctionnement. L'invention concerne en outre un procédé de contrôle d'un fonctionnement du dispositif de levage et de manutention précité.

### [Technique Antérieure]

Certains dispositifs de levage et de manutention tels que les grues de construction, et en particulier les grues à montage par éléments et les grues à montage automatisé, sont composés d'éléments structurels, aussi appelés éléments de charpente, indépendants qui sont assemblés pour former une structure ou charpente, et en particulier pour former une flèche (constituée de plusieurs éléments de flèche), une contre-flèche, un pivot, une mâture aussi appelée pylône (constituée de plusieurs éléments de mâture), et une base sur laquelle est montée la mâture. Ces éléments structurels peuvent être assemblés suivant une configuration variable pour chaque chantier de construction. Par ailleurs, il est classique que certains éléments structurels puissent être utilisés sur plusieurs grues, parfois de modèles différents, comme des éléments structurels de mâture. Généralement, chaque élément structurel est identifié par un marquage physique unique qui lui est propre, et qui peut par exemple indiquer le lieu et la date de fabrication de l'élément structurel.

Lors d'un approvisionnement logistique, un chef de parc prépare et envoie sur un chantier les éléments structurels adéquats.

Une fois ces éléments structurels réceptionnés sur le chantier, un monteur doit s'assurer qu'il monte un élément structurel de type adéquat à un endroit adéquat de la grue afin d'obtenir une configuration de grue prédéfinie. Il est par ailleurs à noter que la grue comporte également :
- des éléments de fonctionnement pour procurer des mouvements du dispositif de levage et de manutention ou d'une charge, tels que des actionneurs comme par exemple un treuil de levage, un treuil de distribution, un treuil de relevage, et des éléments d'entrainement comme par exemple un chariot de distribution pour une distribution de charge, un système de moufle de levage pour le levage de charge ; et
- des éléments de lestage, aussi appelés lests ou contrepoids, généralement prévus au niveau de la base et/ou sur une contre-flèche.

De tels éléments de fonctionnement et de tels éléments de lestage sont ainsi montés sur des éléments structurels, et participent aux capacités et limites de levage du dispositif de levage et de manutention.

Une fois le dispositif de levage et de manutention monté, un monteur ou technicien sélectionne par la suite une courbe de charge adaptée à une configuration du dispositif de levage et de manutention prédéfinie ; étant noté que cette courbe de charge va dépendre de la configuration du dispositif de levage et de manutention et plus spécifiquement des éléments structurels (types, nombres, présence de renforts ou non, et localisations des éléments structurels) qui définissent la rigidité et les dimensions de la structure, comme la hauteur de la mâture, la longueur de la flèche et la longueur de la contre-flèche, et aussi des éléments de fonctionnement (types, nombres et localisations des actionneurs et des éléments d'entrainement) et des éléments de lestage (localisations, poids, nombres).

Aussi, une erreur de montage pourrait conduire à une configuration réelle différente de la configuration prédéfinie, et donc à une sélection d'une courbe de charge inadaptée à la configuration réelle, avec des conséquences pouvant être graves, telles qu'un endommagement ou même un effondrement du dispositif de levage et de manutention.

Un contrôle du montage du dispositif de levage et de manutention est donc effectué d'habitude visuellement. Ce contrôle est généralement long, fastidieux et peut être sujet à une erreur humaine.

L'état de la technique peut être illustré par les enseignements du document US2016223313A qui décrit une machine munie d'un bras mobile comme une grue, comprenant plusieurs segments articulés dont certains sont munis de modules émetteur/récepteur en communication avec un module d'évaluation pour évaluer les positions des segments articulés, et ainsi permettre de connaître les mouvements, vibrations et/ou déflections du bras mobile.

Cependant, cet état de la technique ne propose en aucun cas une solution permettant de faciliter le montage d'un dispositif de levage et de manutention, et surtout de connaitre une configuration de ce dispositif de levage et de manutention, et donc d'adapter une caractéristique de fonctionnement à la configuration, et en particulier une courbe de charge ; la notion de caractéristique de fonctionnement désignant une caractéristique représentative du pilotage du ou des éléments de fonctionnement, qui pour rappel assurent les mouvements du dispositif de levage et de manutention et ainsi les déplacements de la charge, et en particulier des limites de pilotage telles que des limites en charge définies par la courbe de charge précitée.

L'état de la technique peut également être illustré par les enseignements du document DE 10 2015 016856 A1 qui divulgue un dispositif de levage et de manutention selon le préambule de la revendication 1 et un procédé de configuration de grue sur la base d'un portail en ligne qui contient au moins une base de données comprenant une pluralité de configurations de grue standards, avec une interface pour l'accès d'un utilisateur au portail en ligne. Ce procédé utilise notamment une détection de certains éléments structurels pour déterminer la configuration. Un tel procédé de configuration permet de récupérer sur le portail une courbe de charges, cependant celle-ci n'est pas optimale pour la configuration réelle de la grue, et par ailleurs ce procédé est inadapté pour répondre à des configurations variables voire extrêmes avec des longues flèches ou des hauts mâts.

Enfin, le document WO2021028258, qui est une demande antérieure relevant de l'article 54(3) CBE, divulgue un procédé et un dispositif de détection de l'état de mise en place d'une machine de construction, en particulier une grue, avec des éléments d'identification électroniques qui sont fixés aux éléments de mise en place de la machine de construction, et une unité d'évaluation électronique pour déterminer l'état de mise en place et/ou l'emplacement des éléments de mise en place sur la base d'informations reçues des éléments d'identification. Les éléments d'identification fixés aux éléments de mise en place sont pourvus de moyens de génération d'énergie pour générer de l'énergie électrique à partir d'influences de l'environnement, ainsi qu'un accumulateur d'énergie pour stocker l'énergie produite et fournir les éléments d'identification.

La présente invention a pour but de résoudre tout ou partie des inconvénients mentionnés ci-dessus.

Le problème technique à la base de l'invention consiste notamment à fournir un dispositif de levage et de manutention, comme une grue par exemple, permettant de connaitre une configuration dudit dispositif de levage et de manutention et d'adapter précisément une caractéristique de fonctionnement à la configuration dudit dispositif de levage et de manutention, ainsi qu'un procédé de contrôle du fonctionnement dudit dispositif de levage et de manutention.

### [Résumé de l'invention]

A cet effet, la présente invention a pour objet un dispositif de levage et de manutention comprenant une pluralité d'éléments structurels assemblés pour former une structure dudit dispositif de levage et de manutention, une pluralité d'éléments de fonctionnement portés par des éléments structurels compris dans la pluralité d'éléments structurels et conçus pour procurer des mouvements du dispositif de levage et de manutention ou d'une charge, au moins un élément de lestage monté sur un élément structurel, une unité centrale de contrôle pilotant au moins un élément de fonctionnement compris dans la pluralité d'éléments de fonctionnement, ledit dispositif de levage et de manutention étant remarquable en ce qu'il comprend en outre :
- une pluralité de composants d'identification, chaque élément structurel compris dans la pluralité d'éléments structurels étant couplé à un composant d'identification compris dans la pluralité de composants d'identification, chaque élément de fonctionnement compris dans la pluralité d'éléments de fonctionnement étant couplé à un composant d'identification compris dans la pluralité de composants d'identification, et l'au moins un élément de lestage étant couplé à un composant d'identification compris dans la pluralité de composants d'identification, et chaque composant d'identification comprenant un module de radiocommunication présentant une portée de radiocommunication prédéfinie afin de pouvoir communiquer au moins avec un autre composant d'identification, et
- une unité maitre de radiocommunication connectée à la pluralité de composants d'identification et destinée à recevoir une information d'identification de la part de chacun des composants d'identification compris dans la pluralité de composants d'identification;

chacun des composants d'identification étant conformé pour transmettre à l'unité maitre de radiocommunication les informations d'identification selon un protocole de communication de proche en proche entre composants d'identification situés dans leurs portées de radiocommunication respectives ;
et en ce que ladite unité centrale de contrôle est en liaison avec l'unité maitre de radiocommunication et est configurée pour déterminer une localisation de chaque élément structurel compris dans la pluralité d'éléments structurels, de chaque élément de fonctionnement compris dans la pluralité d'éléments de fonctionnement, et de l'au moins un élément de lestage en fonction de l'information d'identification transmise par chacun des composants d'identification à l'unité maitre de radiocommunication, et en déduire une configuration du dispositif de levage et de manutention puis au moins une caractéristique de fonctionnement type dudit dispositif de levage et de manutention associée à ladite configuration.

Ainsi, l'invention permet de remonter les informations d'identification de tous les composants d'identification, associés aux éléments structurels, aux éléments de fonctionnement et au(x) élément(s) de lestage, par une communication de proche en proche jusqu'à l'unité maitre de radiocommunication, et donc jusqu'à l'unité centrale de contrôle.

Cette communication de proche en proche entre les composants d'identification permet avantageusement de remonter les informations d'identification jusqu'à l'unité maitre de radiocommunication, même avec une portée de radiocommunication réduite, du moment qu'elle est suffisante pour communiquer avec un composant d'identification voisin. Une telle solution est particulièrement avantageuse dans le domaine des grues à montage par éléments, car de telles grues peuvent présenter des mâts plus ou moins élevés et des flèches plus ou moins longues selon la configuration de montage retenue, de sorte que peu importe la distance du composant d'identification le plus éloigné de l'unité maitre de radiocommunication, celui-ci pourra toujours faire remonter son information d'identification grâce au protocole de communication de proche en proche implémenté par les composants d'identification.

Par ailleurs, l'invention permet de déduire une caractéristique de fonctionnement type à partir des informations d'identification de tous les composants d'identification, associés aux éléments structurels, aux éléments de fonctionnement et au(x) élément(s) de lestage, ce qui a l'avantage d'optimiser cette caractéristique de fonctionnement type en tenant compte non seulement des éléments structurels, mais en tenant compte aussi des éléments de fonctionnement et du ou des élément(s) de lestage qui participent aux capacités de déplacement du dispositif de levage et de manutention et de la charge.

Selon une possibilité, l'information d'identification communiquée par le composant d'identification de chaque élément structurel de la pluralité d'éléments structurels contient un paramètre structurel qui est représentatif d'une valeur maximale de contraintes admissibles pour ledit élément structurel, et l'unité centrale de contrôle est configurée pour établir la caractéristique de fonctionnement type également en fonction du paramètre structurel associé à chaque élément structurel de la pluralité d'éléments structurels.

Ce paramètre structurel peut être un paramètre représentatif d'une rigidité de l'élément structurel concerné. Autrement dit, l'information d'identification communiquée par le composant d'identification de chaque élément structurel de la pluralité d'éléments structurels, peut contenir un paramètre structurel représentatif d'une rigidité dudit élément structurel. Ce paramètre structurel représentatif de la rigidité dudit élément peut par exemple renseigner sur le fait que ledit élément structurel soit renforcé ou non.

Selon une autre possibilité, l'information d'identification communiquée par le composant d'identification de chaque élément de fonctionnement de la pluralité d'éléments de fonctionnement contient un paramètre de fonctionnement limite qui est représentatif d'une valeur maximale de contraintes admissibles pour ledit élément de fonctionnement, et l'unité centrale de contrôle est configurée pour établir la caractéristique de fonctionnement type également en fonction du paramètre de fonctionnement limite associé à chaque élément de fonctionnement de la pluralité d'éléments de fonctionnement.

Ce paramètre de fonctionnement limite peut être un paramètre représentatif d'une charge maximale admissible pour le mouvement associé à l'élément de fonctionnement concerné ; comme par exemple une charge maximale pour un actionneur tel qu'un treuil ou un vérin.

Selon une autre possibilité, l'information d'identification communiquée par le composant d'identification de l'au moins un élément de lestage contient un paramètre de lestage limite qui est représentatif d'une valeur maximale de contraintes admissibles pour ledit au moins un élément de lestage, et l'unité centrale de contrôle est configurée pour établir la caractéristique de fonctionnement type également en fonction du paramètre de lestage limite associé à l'au moins un élément de lestage.

Ce paramètre de lestage limite peut être un paramètre représentatif d'une masse ou d'un poids de l'élément de lestage concerné.

La prise en considération des paramètres structurels et/ou des paramètres de fonctionnement limite et/ou du ou des paramètre(s) de lestage limite est particulièrement avantageuse pour établir et optimiser la caractéristique de fonctionnement type, en prenant en considération non seulement les éléments mais aussi leurs valeurs maximales de contraintes admissibles ; ces contraintes admissibles étant par exemple déterminées pour des cas de charges statiques, des cas de charges dynamiques et de fatigues.

Le composant d'identification peut par exemple désigner un tag d'identification actif alimenté sur batterie.

Le dispositif de levage et de manutention peut désigner une grue, et par exemple une grue à tour à montage par éléments ou une grue à montage automatisé et peut en outre présenter une ou plusieurs des caractéristiques suivantes, prises seules ou en combinaison.

Selon une possibilité, la pluralité d'éléments structurels sont sélectionnés dans la liste comprenant des éléments de mâture, des éléments de flèche, des éléments de contre-flèche, un pivot (partie tournante au sommet de la mâture), une cage de télescopage, des cadres d'ancrage, une structure de hissage, ou une base (partie d'appui au pied de la mâture).

La cage de télescopage est un élément de structure disposée sous le pivot (ou sous la partie tournante) et qui sert à ajouter ou enlever des éléments de mâture. Une telle cage de télescopage comprend généralement un actionneur linéaire, tel qu'un vérin, qui permet de soulever la partie tournante et de ménager un espace libre pour positionner un nouvel élément de mâture.

Les cadres d'ancrage sont des cadres fixés le long de la mâture et qui sont prévus pour être fixés sur un ouvrage voisin par des liaisons rigides, selon la hauteur finale à atteindre, afin de transmettre à l'ouvrage des efforts engendrés par la grande hauteur de la mâture.

Une structure de hissage, avec ses éventuels cadres support, est un élément de structure disposée au pied de la mâture et qui sert à pousser l'ensemble de la mâture vers le haut.

La pluralité d'éléments de fonctionnement peut être sélectionnés dans la liste comprenant des actionneurs et des éléments d'entrainement, qui participent au déplacement de la charge (par exemple en levage et en distribution) et/ou ou au déplacement d'un ou plusieurs éléments structurels (par exemple orientation de la flèche et abaissement/relevage de la flèche).

Les actionneurs peuvent comprendre au moins un treuil de levage et un treuil de distribution, et les éléments d'entrainement comprennent au moins un chariot de distribution et un système de moufle de levage.

D'autres actionneurs sont également envisageables, tels qu'un treuil ou un vérin d'abaissement/relevage de la flèche, un vérin de télescopage (en accouplement avec une cage de télescopage), un vérin de hissage (en accouplement avec une structure de hissage), ou un moteur d'orientation de la flèche.

Selon une possibilité, l'au moins une caractéristique de fonctionnement type désigne une grandeur ou une courbe représentative des limites de charge du dispositif de levage et de manutention, comme par exemple une courbe de charge ou une masse totale à lever dans le cas d'un télescopage ou d'un hissage; une courbe de charge définissant les charges maximales d'utilisation aux portées considérées.

Chaque composant d'identification peut comprendre un dispositif de contrôle relié à une mémoire contenant l'information d'identification permettant d'identifier l'élément structurel ou l'élément de fonctionnement ou l'élément de lestage associé, à une batterie électrique destinée à alimenter le dispositif de contrôle, et à un module de radiocommunication destiné à assurer la communication entre les composants d'identification.

Selon un mode de réalisation, la communication entre les composants d'identification est de courte ou moyenne distance et se fait par Bluetooth, radiofréquence ou WIFI.

La portée de radiocommunication du module de radiocommunication de chaque composant d'identification peut être inférieure à 30m.

Avantageusement, le fait que chaque module de radiocommunication de chaque composant d'identification possède une portée de radiocommunication inférieure ou égale à 30m, et de préférence comprise entre 15 m et 20 m permet la réception par chaque composant d'identification d'un signal de radiocommunication contenant l'information d'identification, associé par exemple à une puissance en réception du signal entrant (RSSI), en provenance d'un ou plusieurs composants d'identification voisins ainsi que la formation d'un réseau maillé permettant l'extraction par l'unité centrale de contrôle d'une localisation de chacun des éléments de construction, de chacun des éléments de fonctionnement et chacun des éléments de lestage pour connaitre une configuration du dispositif de levage et de manutention.

Avantageusement, le fait que chaque module de radiocommunication de chaque composant d'identification possède une portée de radiocommunication inférieure ou égale à 30m, et de préférence comprise entre 15 m et 20 m permet une localisation du composant d'identification par triangulation.

Selon un mode de réalisation, l'unité centrale de contrôle est configurée pour déterminer une localisation de chaque élément structurel compris dans la pluralité d'éléments structurels, de chaque élément de fonctionnement compris dans la pluralité d'éléments de fonctionnement et de l'au moins un élément de lestage en fonction d'une puissance de signal, d'une atténuation de signal ou d'un temps de réponse de l'information d'identification transmise par chacun des composants d'identification.

L'unité centrale de contrôle peut être configurée pour sélectionner l'au moins une caractéristique de fonctionnement type parmi une pluralité de caractéristiques de fonctionnement type stockées dans une base informatique recensant une pluralité de configurations du dispositif de levage et de manutention auxquelles sont associés des caractéristiques de fonctionnement type respectives.

L'invention concerne également un procédé de contrôle pour contrôler un fonctionnement d'un dispositif de levage et de manutention tel que décrit ci-dessus, ce procédé de contrôle comprenant les étapes suivantes:
- Attacher un composant d'identification sur chacun des éléments structurels compris dans une pluralité d'éléments structurels, sur chacun des éléments de fonctionnement compris dans une pluralité d'éléments de fonctionnement et sur l'au moins un élément de lestage;
- Transmission par le composant d'identification attaché à chacun des éléments structurels, chacun des éléments de fonctionnement et à l'au moins un élément de lestage d'une information d'identification à au moins un autre composant d'identification compris dans une portée de radiocommunication;
- Réception par une unité maitre de radiocommunication connectée à la pluralité de composants d'identification de l'information d'identification de la part de chacun des composants d'identification compris dans la pluralité de composants d'identification, les informations d'identification des composants d'identification étant transmises à l'unité maitre de radiocommunication selon un protocole de proche en proche entre composants d'identification situés dans leurs portées de radiocommunication respectives;
- Transmission de l'information d'identification de chacun des composants d'identification par l'unité maitre de radiocommunication à une unité centrale de contrôle pilotant au moins un élément de fonctionnement compris dans la pluralité d'éléments de fonctionnement, et communiquant avec l'unité maitre de radiocommunication;
- Détermination par l'unité centrale de contrôle d'une localisation de chaque élément structurel compris dans la pluralité d'éléments structurels, de chaque élément de fonctionnement compris dans la pluralité d'éléments de fonctionnement, et de l'au moins un élément de lestage en fonction de l'information d'identification transmise par chacun des composants d'identification à l'unité maitre de radiocommunication;
- Déduction d'une configuration du dispositif de levage et de manutention en fonction de la localisation de chaque élément structurel compris dans la pluralité d'éléments structurels, de la localisation de chaque élément de fonctionnement compris dans la pluralité d'éléments de fonctionnement, de la localisation de l'au moins un élément de lestage et de l'information d'identification de chacun des composants d'identification; et
- Déduction par l'unité centrale de contrôle d'au moins une caractéristique de fonctionnement type du dispositif de levage et de manutention adaptée à la configuration du dispositif de levage et de manutention.

La configuration du dispositif de levage et de manutention peut désigner un ensemble de propriétés relatives au dispositif de levage et de manutention parmi lesquelles une composition de la mâture (nombre d'éléments structurels de mâture, rigidité ou renforcement des éléments structurels de mâture, hauteur de la mâture déduite du nombre et du type d'éléments structurels de mâture, localisation des différents éléments structurels de mâture), une nature de la base (base pivotante ou fixe, appui de la base au sol), une quantité et une localisation des éléments de lestage (nombre d'éléments de lestage au niveau de la base, nombre d'éléments de lestage au niveau de la contre-flèche), une composition de la flèche (nombre d'éléments structurels de flèche, rigidité ou renforcement des éléments structurels de flèche, longueur de la flèche déduite du nombre et du type d'éléments structurels de flèche, localisation des différents éléments structurels de flèche), une nature de la contre-flèche (dimensions et rigidité de la contre-flèche), une nature du chariot de distribution (modèle et capacité de distribution du chariot de distribution), une nature du système de moufle de levage (modèle et capacité de levage du système de moufle de levage), une nature des actionneurs (capacité des treuils, tels que le treuil de levage et le treuil de distribution, voire également le treuil d'abaissement/relevage de la flèche).

Selon une possibilité du procédé, l'information d'identification communiquée par le composant d'identification de chaque élément structurel de la pluralité d'éléments structurels contient un paramètre structurel qui est représentatif d'une valeur maximale de contraintes admissibles pour ledit élément structurel, et dans lequel l'unité centrale de contrôle établit la caractéristique de fonctionnement type également en fonction du paramètre structurel associé à chaque élément structurel de la pluralité d'éléments structurels.

Selon une autre possibilité du procédé, l'information d'identification communiquée par le composant d'identification de chaque élément de fonctionnement de la pluralité d'éléments de fonctionnement contient un paramètre de fonctionnement limite qui est représentatif d'une valeur maximale de contraintes admissibles pour ledit élément de fonctionnement, et dans lequel l'unité centrale de contrôle est établit la caractéristique de fonctionnement type également en fonction du paramètre de fonctionnement limite associé à chaque élément de fonctionnement de la pluralité d'éléments de fonctionnement.

Selon une autre possibilité du procédé, l'information d'identification communiquée par le composant d'identification de l'au moins un élément de lestage contient un paramètre de lestage limite qui est représentatif d'une valeur maximale de contraintes admissibles pour ledit au moins un élément de lestage, et dans lequel l'unité centrale de contrôle établit la caractéristique de fonctionnement type également en fonction du paramètre de lestage limite associé à l'au moins un élément de lestage.

L'étape de déduction de l'au moins une caractéristique de fonctionnement type comprend outre une sélection d'au moins une caractéristique de fonctionnement type parmi une pluralité de caractéristiques de fonctionnement type stockées dans une base informatique recensant une pluralité de configurations du dispositif de levage et de manutention auxquelles sont associés des caractéristiques de fonctionnement type respectives.

Dans le procédé décrit, si la configuration du dispositif de levage et de manutention déduite lors de l'étape ne figure pas dans la base informatique, alors l'unité centrale de contrôle émet un signal d'alerte et bloque une mise en service du dispositif de levage et de manutention.

Selon un premier mode de mise en œuvre, l'étape de déduction de l'au moins une caractéristique de fonctionnement type consiste à déduire une unique caractéristique de fonctionnement type adaptée à la configuration du dispositif de levage et de manutention.

Dans ce mode de mise en œuvre, le procédé décrit peut comprendre une étape de sélection automatique par l'unité centrale de contrôle de la caractéristique de fonctionnement type pour induire une limitation d'un pilotage du dispositif de levage et de manutention par un pilote.

Selon un deuxième mode de mise en œuvre du procédé décrit, l'étape de déduction de l'au moins une caractéristique de fonctionnement type consiste à déduire au moins deux caractéristiques de fonctionnement type adaptées à la configuration du dispositif de levage et de manutention, ledit procédé comprenant en outre les étapes suivantes:
- Affichage pour un pilote, en charge du pilotage du dispositif de levage et de manutention, des au moins deux caractéristiques de fonctionnement type ;
- Sélection par le pilote d'une caractéristique de fonctionnement type favorite parmi les au moins deux caractéristiques de fonctionnement type;
- Sélection par l'unité centrale de contrôle de la caractéristique de fonctionnement type favorite pour induire une limitation d'un pilotage du dispositif de levage et de manutention par le pilote.

### [Brève description des Figures]

L'invention sera mieux comprise à l'aide de la description détaillée qui est exposée ci-dessous en regard des dessins annexés dans lesquels :
[Fig.1] est une représentation schématique d'un dispositif de levage et de manutention comprenant des éléments structurels, de fonctionnement et de lestage.
[Fig.2] est une représentation schématique du dispositif de levage et de manutention de la figure 1 comprenant une pluralité de composants d'identification.
[Fig.3] est un schéma représentant une communication de proche en proche entre les composants d'identification de la figure 2 et une unité maitre de radiocommunication reliée à une unité centrale de contrôle.
[Fig.4] est un organigramme montrant des étapes d'exécution d'un premier mode de mise en œuvre d'un procédé de contrôle d'un fonctionnement du dispositif de levage et de manutention de la figure 1.
[Fig.5] est un organigramme montrant des étapes d'exécution d'un deuxième mode de mise en œuvre d'un procédé de contrôle d'un fonctionnement du dispositif de levage et de manutention de la figure 1.
[Fig.6] est une représentation schématique d'un composant d'identification.

### [Description détaillée]

Dans la description détaillée qui va suivre des figures définies ci-dessus, les mêmes éléments ou les éléments remplissant des fonctions identiques pourront conserver les mêmes références de manière à simplifier la compréhension de l'invention.

### Composition du dispositif de levage et de manutention

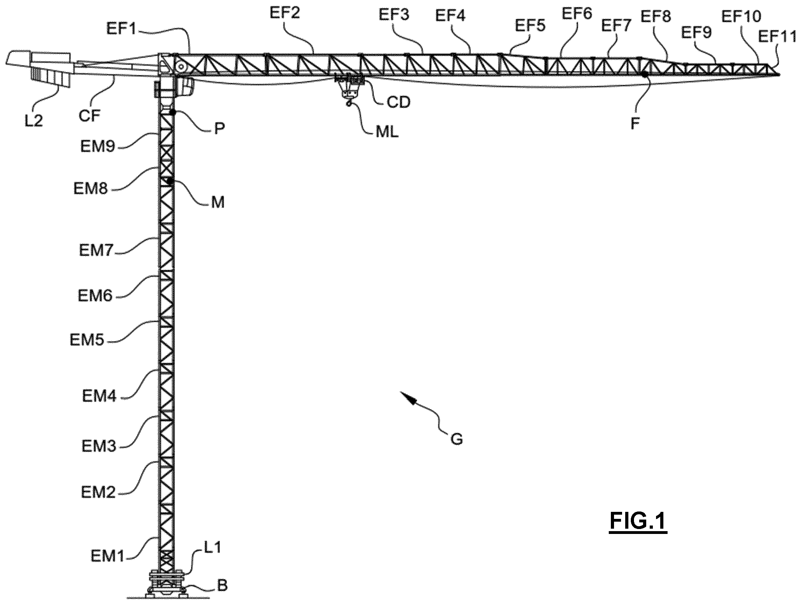

L'invention concerne un dispositif de levage et de manutention G lequel désigne une grue représentée à la figure 1, et par exemple une grue à tour à montage par éléments ou une grue à montage automatisé, comprenant une pluralité d'éléments structurels EMi, EFj, B, P, CF assemblés pour former une structure dudit dispositif de levage et de manutention.

Dans l'exemple illustré en Figure 1, le dispositif de levage et de manutention G comprend les éléments structurels suivants :
- des éléments de mâture EMi (ici EM1, EM2, EM3, EM4,...EM9) qui, une fois assemblés, forment une mâture M d'extension verticale ;
- une base B sur laquelle est fixée le pied de la mâture M, ladite base B reposant généralement au sol ;
- un pivot P fixé au sommet de la mâture M et mobile en rotation autour d'un axe vertical ;
- des éléments de flèche EFj (ici EF1, EF2, EF3, EF4, ... EF11) qui, une fois assemblés sur le pivot P, forme une flèche F d'extension horizontale ; et
- une contre-flèche CF assemblée sur le pivot P, à l'opposé de la flèche F.

Le dispositif de levage et de manutention G comprend également une pluralité d'éléments de fonctionnement portés par des éléments structurels compris dans la pluralité d'éléments structurels EMi, EFj, B, P, CF et conçus pour procurer des mouvements du dispositif de levage et de manutention G ou d'une charge. Les éléments de fonctionnement peuvent être sélectionnés dans la liste comprenant des actionneurs et des éléments d'entrainement.

Dans l'exemple illustré en Figure 1, les éléments d'entrainement comprennent au moins un chariot de distribution CD mobile le long de la flèche F pour une distribution d'une charge, et un système de moufle de levage ML suspendue au chariot de distribution CD pour un levage de la charge. Aussi, les actionneurs peuvent comprendre au moins un treuil de distribution (non illustré) qui actionne le déplacement du chariot de distribution CD via un câble de distribution, et un treuil de levage (non illustré) qui actionne le déplacement du système de moufle de levage ML via un câble de levage. Ces actionneurs peuvent également comprendre un moteur d'orientation (non illustré) monté sur le pivot P pour actionner la rotation de la partie tournante composée du pivot P, de la flèche F et de la contre-flèche CF.

Le dispositif de levage et de manutention G comprend aussi au moins un élément de lestage L1, L2 monté sur un élément structurel.

Dans l'exemple illustré en Figure 1, les éléments de lestage comprennent un ou plusieurs lests L1 montés sur la base B, et également un ou plusieurs lests L2 montés sur la contre-flèche CF.

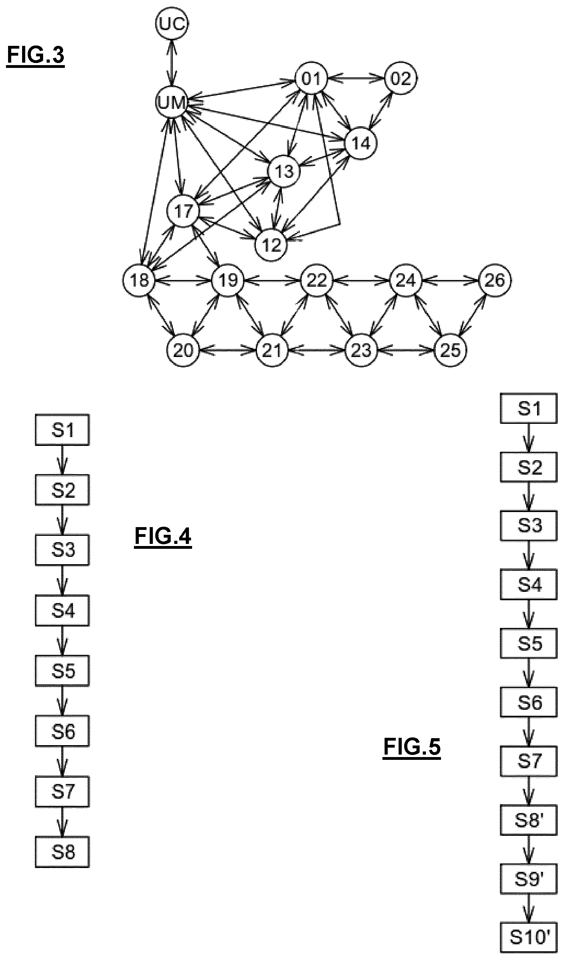

Le dispositif de levage et de manutention G comprend une unité centrale de contrôle UC (illustrée en Figure 3) pilotant au moins un élément de fonctionnement compris dans la pluralité d'éléments de fonctionnement. En l'occurrence, cette unité centrale de contrôle UC commande les actionneurs, tels que le treuil de distribution, le treuil de levage et le moteur d'orientation précités.

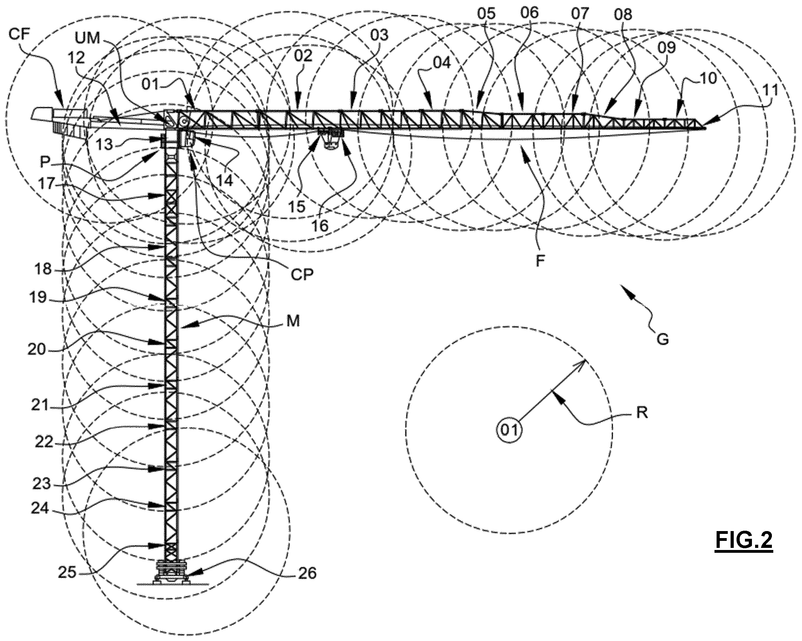

En référence à la Figure 2, ledit dispositif de levage et de manutention G comprend en outre une pluralité de composants d'identification 01-26, chaque élément structurel compris dans la pluralité d'éléments structurels EMi, EFj, B, P, CF étant couplé à un composant d'identification compris dans la pluralité de composants d'identification 01-26, chaque élément de fonctionnement compris dans la pluralité d'éléments de fonctionnement étant couplé à un composant d'identification compris dans la pluralité de composants d'identification 01-26, et l'au moins un élément de lestage L1, L2 étant couplé à un composant d'identification compris dans la pluralité de composants d'identification 01-26.

Dans l'exemple illustré en Figure 2, les composants d'identification 01-11 sont montés sur onze éléments de flèche EF1, ..., EF11 formant la flèche F, le composant d'identification 12 est monté sur la contre-flèche CF, le composant d'identification 13 est monté sur le pivot P, le composant d'identification 14 est monté sur une cabine de pilotage CP portée par le pivot P, le composant d'identification 15 est monté sur le chariot de distribution CD, le composant d'identification 16 est monté sur le système de moufle de levage ML, les composants d'identification 17-25 sont montés sur neuf éléments de mâture EM1, ..., EM9 formant la mâture M, et le composant d'identification 26 est monté sur la base B. Aussi, sur cette Figure 2, tous les composants d'identification ne sont pas représentés, manquent ceux associés aux actionneurs et ceux associés aux éléments de lestage L1, L2.

Chaque composant d'identification 01-26 comprenant un module de radiocommunication présentant une portée de radiocommunication R prédéfinie afin de pouvoir communiquer au moins avec un autre composant d'identification.

Le dispositif de levage et de manutention G comprend une unité maitre de radiocommunication UM connectée à la pluralité de composants d'identification 01-26 et destinée à recevoir une information d'identification de la part de chacun des composants d'identification compris dans la pluralité de composants d'identification 01-26. Cette unité maitre de radiocommunication UM est également connectée à l'unité centrale de contrôle UC, par exemple par voie filaire ou non filaire.

### Composants d'identification

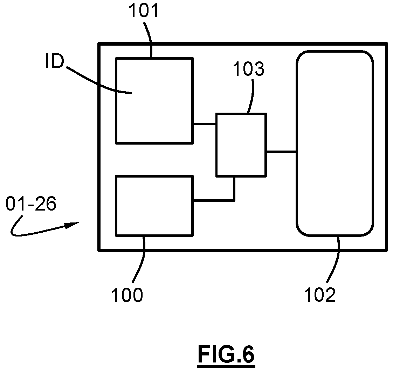

En référence à la Figure 6, dans le dispositif de levage et de manutention G, chaque composant d'identification 01-26 comprend :
- le module de radiocommunication 100 présentant la portée de radiocommunication R prédéfinie (illustrée en Figure 2) afin de pouvoir communiquer au moins avec un autre composant d'identification, ledit module de radiocommunication formant un émetteur/récepteur ;
- une mémoire 101 stockant une information d'identification ID permettant d'identifier individuellement l'élément associé, que ce soit un élément structurel, un élément de fonctionnement ou un élément de lestage ;
- une batterie électrique 102 ; et
- un dispositif de contrôle 103, par exemple du type processeur ou contrôleur, relié à la mémoire 101, à la batterie électrique 102 et au module de radiocommunication 100 pour permettre au composant d'identification d'émettre son information d'identification ID à destination d'un ou plusieurs composants d'identification voisins, et également de recevoir en provenance d'un ou plusieurs composants d'identification voisins leurs informations d'identification ID respectives afin de faire suivre aux autres composants d'identification voisins cette ou ces informations d'identification ID qu'il aurait reçu d'un ou plusieurs composants d'identification voisins.

De cette manière, les composants d'identification 01-26 forment un réseau maillé ou réseau « mesh » avec des composants d'identification 01-26 autonomes qui communiquent de proche en proche selon un protocole radio décentralisé. Il est entendu par « composant d'identification voisin » un composant d'identification situé dans la portée de radiocommunication R.

Dans le réseau maillé que forment les composants d'identification 01-26, l'unité maitre de radiocommunication UM est connectée :
- soit directement aux composants d'identification qui lui sont voisins, comme par les exemples les composants d'identification 01, 12, 13, 14, 17 et 18 dans l'exemple des Figures 1 et 3 ;
- soit indirectement aux composants d'identification qui ne lui sont pas voisins, via une communication de proche en proche qui passe par l'un des composants d'identification voisins.

Autrement dit, chacun des composants d'identification 01-26 est conformé pour transmettre à l'unité maitre de radiocommunication UM les informations d'identification selon un protocole de communication de proche en proche entre composants d'identification situés dans leurs portées de radiocommunication R. On entend par communication de proche en proche une transmission successive sans fil d'un signal de radiocommunication entre des composants d'identification situés dans leurs portées de radiocommunication R jusqu'à ce que le signal de radiocommunication atteigne l'unité maitre de radiocommunication UM comme le montre la figure 3.

Selon un mode de réalisation, le module de radiocommunication de chacun des composants d'identification 01-26 est un module de radiocommunication à courte ou moyenne portée, c'est-à-dire avec une portée R inférieure ou égale à 30 mètres, voire inférieure ou égale à 20 mètres. Ce module de radiocommunication est par exemple un module de radiocommunication par Bluetooth, radiofréquence ou WIFI.

Pour chaque composant d'identification 01-26, l'information d'identification contient également un paramètre limite qui est représentatif d'une valeur maximale de contraintes admissibles pour l'élément concerné, à savoir :
- pour chaque élément structurel, un paramètre structurel qui est représentatif d'une valeur maximale de contraintes admissibles pour ledit élément structurel ;
- pour chaque élément de fonctionnement, un paramètre de fonctionnement limite qui est représentatif d'une valeur maximale de contraintes admissibles pour ledit élément de fonctionnement ; et
- pour le ou chaque élément de lestage, un paramètre de lestage limite qui est représentatif d'une valeur maximale de contraintes admissibles pour ledit élément de lestage.

A titre d'exemple, l'information d'identification communiquée par le composant d'identification de chaque élément structurel de la pluralité d'éléments structurels, peut contenir le paramètre structurel représentatif d'une rigidité dudit élément structurel.

Ce paramètre structurel représentatif de la rigidité dudit élément peut par exemple renseigner sur le fait que ledit élément soit renforcé ou non.

L'unité centrale de contrôle UC est configurée pour établir la caractéristique de fonctionnement type également en fonction du paramètre structurel associé à chaque élément structurel de la pluralité d'éléments structurels, du paramètre de fonctionnement limite associé à chaque élément de fonctionnement de la pluralité d'éléments de fonctionnement, et du paramètre de lestage limite associé au ou à chaque élément de lestage.

Avantageusement, la formation du réseau maillé avec des composants d'identification 01-26 autonomes qui communiquent de proche en proche selon un protocole radio décentralisé, chaque composant d'identification 01-26 émettant vers au moins un composant d'identification voisin un signal de radiocommunication contenant une information d'identification permet à l'unité centrale de contrôle UC de :
- récupérer, via l'unité maitre de radiocommunication UM, l'ensemble des signaux de radiocommunication contenant les informations d'identification des différents composants d'identification 01-26 ; et
- calculer ou déduire une localisation de chacun des composants d'identification 01-26 dans le dispositif de levage et de manutention G à partir de ces signaux ;
- déduire une localisation de chacun des éléments structurels, chacun des éléments de fonctionnement et chacun des éléments de lestage qui sont associés aux différents composants d'identification 01-26, à partir des informations d'identification contenues dans leurs signaux de radiocommunication ;
- construire ou déduire une configuration du dispositif de levage et de manutention G en fonction de la localisation de ces éléments structurels, éléments de fonctionnement et éléments de lestage.

Avantageusement, l'unité centrale de contrôle UC opère la localisation de chacun des composants d'identification 01-26 au moins en partie par triangulation, en déterminant qui est ou sont le ou les voisins de chacun des composants d'identification 01-26.

En variante ou en complément de cette localisation par triangulation, l'unité centrale de contrôle UC peut déterminer la localisation de chacun des composants d'identification 01-26 en fonction d'une puissance du signal de radiocommunication reçu par les composants d'identification, d'une atténuation du signal de radiocommunication reçu par les composants d'identification ou d'un temps de réponse de l'information d'identification transmise par chacun des composants d'identification. En effet, chacun de ces paramètres de signal (puissance reçue ou RSSI, atténuation ou temps de réponse) est fonction de la distance entre les deux composants d'identification qui communiquent entre eux.

Le tableau [Table 1] représente un exemple d'une séquence d'informations relative à une mâture M du dispositif de levage et de manutention G transmise de l'unité maitre de radiocommunication UM à l'unité centrale de contrôle UC. L'unité centrale de contrôle UC mesure une distance entre l'unité maitre de radiocommunication UM et chaque élément de mâture EMi de la mâture M, auxquelles sont associées les informations d'identification de sorte que l'unité centrale de contrôle UC peut déduire une composition de la mâture M.

**[Table 1]**

| Composant d'identification | Distance avec l'unité maitre de radiocommunication UM | Information d'identification |
|---|---|---|
| 17 | 4,5 m | Elément de mâture EM9 de type 1 |
| 18 | 9,4 m | Elément de mâture EM8 de type 1 |
| 19 | 14,3 m | Elément de mâture EM7 de type 1 |
| ... | ... | ... |
| 25 | 43,7 m | Elément de mâture EM1 de type 1 renforcé |
| 26 | 49,0 m | Base B de type XX |

L'unité centrale de contrôle UC peut appliquer un contrôle de cohérence entre les distances mesurées et des distances théoriques stockées dans ladite unité centrale de contrôle UC. L'unité centrale de contrôle UC est ainsi en mesure de détecter s'il manque un ou plusieurs éléments de mâture dans la mâture M et peut par conséquent le signaler à un opérateur en charge d'un montage de la mâture M.

De la même manière, l'unité centrale de contrôle UC peut être en mesure de déterminer une composition de la flèche F, la nature de la contre flèche CF ou encore la nature du chariot de distribution CD, ...

### Détermination d'une caractéristique de fonctionnement

Dans le dispositif de levage et de manutention G selon l'invention, l'unité centrale de contrôle UC est donc en liaison avec l'unité maitre de radiocommunication UM et est configurée pour déterminer une localisation de chaque élément structurel compris dans la pluralité d'éléments structurels, de chaque élément de fonctionnement compris dans la pluralité d'éléments de fonctionnement, et de chaque élément de lestage L1, L2 en fonction de l'information d'identification (et plus précisément du signal de radiocommunication contenant l'information d'identification) transmise par chacun des composants d'identification 01-26 à l'unité maitre de radiocommunication UM, et en déduire une configuration du dispositif de levage et de manutention G.

Il est à noter que l'unité centrale de contrôle UC peut établir la caractéristique de fonctionnement type également en fonction du paramètre structurel associé à chaque élément structurel de la pluralité d'éléments structurels, du paramètre de fonctionnement limite associé à chaque élément de fonctionnement de la pluralité d'éléments de fonctionnement, et du paramètre de lestage limite associé au ou à chaque élément de lestage.

Une fois que l'unité centrale de contrôle UC a établi la configuration du dispositif de levage et de manutention G, cette unité centrale de contrôle UC détermine au moins une caractéristique de fonctionnement type du dispositif de levage et de manutention G associée à ladite configuration.

L'au moins une caractéristique de fonctionnement type désigne une grandeur ou une courbe représentative des limites de charge, comme par exemple une courbe de charge. La courbe de charge définit des charges maximales pouvant être soulevées par le dispositif de levage et de manutention G à des portées considérées le long de sa flèche F, notamment en fonction aussi d'une prise au vent conventionnelle retenue lors d'une conception du dispositif de levage et de manutention G.

Selon une possibilité, l'unité centrale de contrôle UC est configurée pour sélectionner l'au moins une caractéristique de fonctionnement type parmi une pluralité de caractéristiques de fonctionnement type stockées dans une base informatique recensant une pluralité de configurations du dispositif de levage et de manutention G auxquelles sont associés des caractéristiques de fonctionnement type respectives. La base informatique relative au dispositif de levage et de manutention G peut par exemple désigner une base de données locale de l'unité centrale de contrôle UC ou bien enregistrées sur un serveur dédié, et par exemple un serveur distant dédié.

L'au moins une caractéristique de fonctionnement type sélectionnée par l'unité centrale de contrôle UC peut tenir compte d'une règlementation locale ou bien d'une grandeur physique relative au vent, une vitesse du vent par exemple.

### Procédé de contrôle d'un fonctionnement du dispositif de levage et de manutention

L'invention concerne également un procédé de contrôle d'un fonctionnement d'un dispositif de levage et de manutention G comprenant les étapes suivantes représentées dans les figures 4 et 5:
- Attacher S1 un composant d'identification 01-26 sur chacun des éléments structurels compris dans une pluralité d'éléments structurels, sur chacun des éléments de fonctionnement compris dans une pluralité d'éléments de fonctionnement et sur chacun des éléments de lestage;
- Transmission S2 par le composant d'identification 01-26 attaché à chacun des éléments structurels, chacun des éléments de fonctionnement et chacun des éléments de lestage d'une information d'identification à au moins un autre composant d'identification compris dans la portée de radiocommunication R;
- Réception S3 par l'unité maitre de radiocommunication UM connectée à la pluralité de composants d'identification 01-26 d'une information d'identification de la part de chacun des composants d'identification compris dans la pluralité de composants d'identification 01-26, les informations d'identification des composants d'identification étant transmises à l'unité maitre de radiocommunication UM selon un protocole de proche en proche entre composants d'identification 01-26 situés dans leurs portées de radiocommunication R respectives;

- Transmission S4 de l'information d'identification de chacun des composants d'identification 01-26 par l'unité maitre de radiocommunication UM à l'unité centrale de contrôle UC;
- Détermination S5 par l'unité centrale de contrôle UC d'une localisation de chaque élément structurel compris dans la pluralité d'éléments structurels, de chaque élément de fonctionnement compris dans la pluralité d'éléments de fonctionnement, et de chaque élément de lestage en fonction de l'information d'identification transmise par chacun des composants d'identification à l'unité maitre de radiocommunication UM;
- Déduction S6 de la configuration du dispositif de levage et de manutention G en fonction de la localisation de chaque élément structurel compris dans la pluralité d'éléments structurels, de la localisation de chaque élément de fonctionnement compris dans la pluralité d'éléments de fonctionnement, de la localisation de chaque élément de lestage et de l'information d'identification de chacun des composants d'identification 01-26;
- Déduction S7 par l'unité centrale de contrôle UC de l'au moins une caractéristique de fonctionnement type du dispositif de levage et de manutention G adaptée à la configuration du dispositif de levage et de manutention G.

L'étape S7 de déduction de l'au moins une caractéristique de fonctionnement type comprend, comme précédemment expliqué, une sélection d'au moins une caractéristique de fonctionnement type parmi une pluralité de caractéristiques de fonctionnement type stockées dans la base informatique recensant une pluralité de configurations du dispositif de levage et de manutention G auxquelles sont associées des caractéristiques de fonctionnement type respectives.

Dans le procédé décrit, si la configuration du dispositif de levage et de manutention G déduite lors de l'étape S6ne figure pas dans la base informatique, alors l'unité centrale de contrôle UC émet un signal d'alerte et bloque une mise en service du dispositif de levage et de manutention G.

### Premier mode de mise en œuvre

Selon un premier mode de mise en œuvre, l'étape S7 de déduction de l'au moins une caractéristique de fonctionnement type consiste à déduire une unique caractéristique de fonctionnement type adaptée à la configuration du dispositif de levage et de manutention G. Par exemple, dans la base informatique, une unique caractéristique de fonctionnement type est associée à la configuration.

Dans ce mode de mise en œuvre, le procédé décrit peut comprendre une étape de sélection S8 représentée à la figure 4 automatique par l'unité centrale de contrôle UC de la caractéristique de fonctionnement type pour induire une limitation d'un pilotage du dispositif de levage et de manutention G par un pilote. Autrement dit, le pilote du dispositif de levage et de manutention G, généralement localisé dans la cabine de pilotage CP, est limité dans son pilotage sur la base de cette caractéristique de fonctionnement type qui, pour rappel, peut avantageusement être une courbe de charge.

### Deuxième mode de mise en œuvre

Selon un deuxième mode de mise en œuvre du procédé décrit, l'étape S7 de déduction de l'au moins une caractéristique de fonctionnement type consiste à déduire au moins deux caractéristiques de fonctionnement type adaptées à la configuration du dispositif de levage et de manutention. Par exemple, dans la base informatique, deux caractéristiques de fonctionnement type sont associées à la configuration, par exemple une caractéristique de fonctionnement type qui privilégiera une capacité de levage en bout de flèche au détriment d'une capacité maximale de levage en pied de flèche, et une autre caractéristique de fonctionnement type qui privilégiera une capacité de levage en pied de flèche au détriment d'une capacité maximale de levage en bout de flèche.

Dans ce deuxième mode, le procédé comprend en outre les étapes suivantes représentées à la figure 5:
- Affichage S8' pour le pilote, en charge du pilotage du dispositif de levage et de manutention G, des au moins deux caractéristiques de fonctionnement type ;
- Sélection S9' par le pilote d'une caractéristique de fonctionnement type favorite parmi les au moins deux caractéristiques de fonctionnement type (par exemple en fonction des conditions sur site, et en particulier des conditions de vent);
- Sélection S10' par l'unité centrale de contrôle UC de la caractéristique de fonctionnement type favorite pour induire une limitation d'un pilotage du dispositif de levage et de manutention G par le pilote.

Autrement dit, le pilote du dispositif de levage et de manutention G est limité dans son pilotage sur la base de cette caractéristique de fonctionnement type favorite qu'il a choisi parmi celles adaptées à la configuration.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de levage et de manutention (G) comprenant :
• une pluralité d'éléments structurels (EMi, EFj, B, P, CF) assemblés pour former une structure dudit dispositif de levage et de manutention ;
• une pluralité d'éléments de fonctionnement (CD, ML) portés par des éléments structurels compris dans la pluralité d'éléments structurels et conçus pour procurer des mouvements du dispositif de levage et de manutention ou d'une charge;
• au moins un élément de lestage (L1; L2) monté sur un élément structurel ;
• une unité centrale de contrôle (UC) pilotant au moins un élément de fonctionnement compris dans la pluralité d'éléments de fonctionnement (CD, ML);
ledit dispositif de levage et de manutention (G) comprend en outre :
• une pluralité de composants d'identification (01-26), chaque élément structurel compris dans la pluralité d'éléments structurels (EMi, EFj, B, P, CF) étant couplé à un composant d'identification compris dans la pluralité de composants d'identification (01-26), chaque élément de fonctionnement compris dans la pluralité d'éléments de fonctionnement (CD, ML) étant couplé à un composant d'identification compris dans la pluralité de composants d'identification (01-26), et l'au moins un élément de lestage (L1; L2) étant couplé à un composant d'identification compris dans la pluralité de composants d'identification (01-26), et chaque composant d'identification comprenant un module de radiocommunication présentant une portée de radiocommunication (R) prédéfinie afin de pouvoir communiquer au moins avec un autre composant d'identification ; et
• une unité maitre de radiocommunication (UM) connectée à la pluralité de composants d'identification (01-26) et destinée à recevoir une information d'identification de la part de chacun des composants d'identification compris dans la pluralité de composants d'identification (01-26);
**caractérise en ce que**
chacun des composants d'identification (01-26) est conformé pour transmettre à l'unité maitre de radiocommunication (UM) les informations d'identification selon un protocole de communication de proche en proche entre composants d'identification situés dans leurs portées de radiocommunication (R) respectives ;
**et en ce que** ladite unité centrale de contrôle (UC) est en liaison avec l'unité maitre de radiocommunication (UM) et est configurée pour :
• déterminer une localisation de chaque élément structurel compris dans la pluralité d'éléments structurels (EMi, EFj, B, P, CF), de chaque élément de fonctionnement compris dans la pluralité d'éléments de fonctionnement (CD, ML), et de l'au moins un élément de lestage (L1; L2) en fonction de l'information d'identification transmise par chacun des composants d'identification (01-26) à l'unité maitre de radiocommunication (UM), et
• en déduire une configuration du dispositif de levage et de manutention (G) puis au moins une caractéristique de fonctionnement type dudit dispositif de levage et de manutention (G) associée à ladite configuration.

2. Dispositif de levage et de manutention (G) selon la revendication 1, dans lequel l'information d'identification communiquée par le composant d'identification de chaque élément structurel de la pluralité d'éléments structurels (EMi, EFj, B, P, CF) contient un paramètre structurel qui est représentatif d'une valeur maximale de contraintes admissibles pour ledit élément structurel, et dans lequel l'unité centrale de contrôle (UC) est configurée pour établir la caractéristique de fonctionnement type également en fonction du paramètre structurel associé à chaque élément structurel de la pluralité d'éléments structurels (EMi, EFj, B, P, CF).

3. Dispositif de levage et de manutention (G) selon la revendication 2, dans lequel le paramètre structurel est un paramètre représentatif d'une rigidité de l'élément structurel concerné.

4. Dispositif de levage et de manutention (G) selon l'une quelconque des revendications 1 à 3, dans lequel l'information d'identification communiquée par le composant d'identification de chaque élément de fonctionnement de la pluralité d'éléments de fonctionnement (CD, ML) contient un paramètre de fonctionnement limite qui est représentatif d'une valeur maximale de contraintes admissibles pour ledit élément de fonctionnement, par exemple déterminées pour des cas de charge statiques, dynamiques et de fatigues, et dans lequel l'unité centrale de contrôle (UC) est configurée pour établir la caractéristique de fonctionnement type également en fonction du paramètre de fonctionnement limite associé à chaque élément de fonctionnement de la pluralité d'éléments de fonctionnement (CD, ML).

5. Dispositif de levage et de manutention (G) selon l'une quelconque des revendications 1 à 4, dans lequel l'information d'identification communiquée par le composant d'identification de l'au moins un élément de lestage (L1; L2) contient un paramètre de lestage limite qui est représentatif d'une valeur maximale de contraintes admissibles pour ledit au moins un élément de lestage (L1; L2), par exemple déterminées pour des cas de charge statiques, dynamiques et de fatigues, et dans lequel l'unité centrale de contrôle (UC) est configurée pour établir la caractéristique de fonctionnement type également en fonction du paramètre de lestage limite associé à l'au moins un élément de lestage (L1, L2).

6. Dispositif de levage et de manutention (G) selon l'une quelconque des revendications précédentes, lequel désigne une grue, et par exemple une grue à tour à montage par éléments ou une grue à montage automatisé.

7. Dispositif de levage et de manutention (G) selon l'une des revendications précédentes, dans lequel la pluralité d'éléments structurels (EMi, EFj, B, P, CF) sont sélectionnés dans la liste comprenant des éléments de mâture (EMi), des éléments de flèche (EFi), une contre-flèche (CF), un pivot (P), une cage de télescopage, des cadres d'ancrage, une structure de hissage, ou une base (B).

8. Dispositif de levage et de manutention (G) selon l'une quelconque des revendications précédentes dans lequel la pluralité d'éléments de fonctionnement (CD, ML) sont sélectionnés dans la liste comprenant des actionneurs et des éléments d'entrainement (CD, ML), et par exemple les actionneurs comprennent au moins un treuil de levage et un treuil de distribution, et par exemple les éléments d'entrainement comprennent au moins un chariot de distribution (CD) et un système de moufle de levage (ML).

9. Dispositif de levage et de manutention (G) selon l'une quelconque des revendications précédentes dans lequel l'au moins une caractéristique de fonctionnement type désigne une grandeur ou une courbe représentative des limites de charge du dispositif de levage et de manutention (G), comme par exemple une courbe de charge.

10. Dispositif de levage et de manutention (G) selon l'une quelconque des revendications précédentes dans lequel chaque composant d'identification (01-26) comprend un dispositif de contrôle relié à une mémoire contenant l'information d'identification permettant d'identifier l'élément structurel (EMi, EFj, B, P, CF) ou l'élément de fonctionnement (CD, ML) ou l'élément de lestage (L1; L2) associé, à une batterie électrique destinée à alimenter le dispositif de contrôle, et à un module de radiocommunication destiné à assurer la communication entre les composants d'identification.

11. Dispositif de levage et de manutention (G) selon l'une quelconque des revendications précédentes dans lequel la portée de radiocommunication (R) du module de radiocommunication de chaque composant d'identification est inférieure ou égale à 30m.

12. Dispositif de levage et de manutention (G) selon l'une quelconque des revendications précédentes dans lequel l'unité centrale de contrôle (UC) est configurée pour déterminer une localisation de chaque élément structurel compris dans la pluralité d'éléments structurels (EMi, EFj, B, P, CF), de chaque élément de fonctionnement compris dans la pluralité d'éléments de fonctionnement (CD, ML) et de l'au moins un élément de lestage (L1; L2) en fonction d'une puissance de signal, d'une atténuation de signal ou d'un temps de réponse de l'information d'identification transmise par chacun des composants d'identification (01-26).

13. Procédé de contrôle pour contrôler un fonctionnement d'un dispositif de levage et de manutention (G) conforme à l'une quelconque des revendications précédentes, ledit procédé de contrôle comprenant les étapes suivantes :
• Attacher (S1) un composant d'identification sur chacun des éléments structurels compris dans une pluralité d'éléments structurels (EMi, EFj, B, P, CF), sur chacun des éléments de fonctionnement compris dans une pluralité d'éléments de fonctionnement (CD, ML) et sur l'au moins un élément de lestage (L1; L2);
• Transmission (S2) par le composant d'identification attaché à chacun des éléments structurels (EMi, EFj, B, P, CF), chacun des éléments de fonctionnement (CD, ML) et à l'au moins un élément de lestage (L1; L2) d'une information d'identification à au moins un autre composant d'identification (01-26) compris dans une portée de radiocommunication (R);
• Réception (S3) par une unité maitre de radiocommunication (UM) connectée à la pluralité de composants d'identification (01-26) de l'information d'identification de la part de chacun des composants d'identification compris dans la pluralité de composants d'identification (01-26), les informations d'identification des composants d'identification étant transmises à l'unité maitre de radiocommunication (UM) selon un protocole de proche en proche entre composants d'identification (01-26) situés dans leurs portées de radiocommunication (R) respectives ;
• Transmission (S4) de l'information d'identification de chacun des composants d'identification (01-26) par l'unité maitre de radiocommunication (UM) à une unité centrale de contrôle (UC) pilotant au moins un élément de fonctionnement compris dans la pluralité d'éléments de fonctionnement (CD, ML), et communiquant avec l'unité maitre de radiocommunication (UM);
• Détermination (S5) par l'unité centrale de contrôle (UC) d'une localisation de chaque élément structurel compris dans la pluralité d'éléments structurels (EMi, EFj, B, P, CF), de chaque élément de fonctionnement compris dans la pluralité d'éléments de fonctionnement (CD, ML), et de l'au moins un élément de lestage (L1; L2) en fonction de l'information d'identification transmise par chacun des composants d'identification à l'unité maitre de radiocommunication (UM);
• Déduction (S6) d'une configuration du dispositif de levage et de manutention (G) en fonction de la localisation de chaque élément structurel compris dans la pluralité d'éléments structurels (EMi, EFj, B, P, CF), de la localisation de chaque élément de fonctionnement compris dans la pluralité d'éléments de fonctionnement (CD, ML), de la localisation de l'au moins un élément de lestage (L1; L2) et de l'information d'identification de chacun des composants d'identification (01-26);
• Déduction (S7) par l'unité centrale de contrôle (UC) d'au moins une caractéristique de fonctionnement type du dispositif de levage et de manutention (G) adaptée à la configuration du dispositif de levage et de manutention (G).

14. Procédé de contrôle selon la revendication 13, dans lequel :
- l'information d'identification communiquée par le composant d'identification de chaque élément structurel de la pluralité d'éléments structurels (EMi, EFj, B, P, CF) contient un paramètre structurel qui est représentatif d'une valeur maximale de contraintes admissibles pour ledit élément structurel, et dans lequel l'unité centrale de contrôle (UC) établit la caractéristique de fonctionnement type également en fonction du paramètre structurel associé à chaque élément structurel de la pluralité d'éléments structurels (EMi, EFj, B, P, CF) ; et/ou
- lequel l'information d'identification communiquée par le composant d'identification de chaque élément de fonctionnement de la pluralité d'éléments de fonctionnement (CD, ML) contient un paramètre de fonctionnement limite qui est représentatif d'une valeur maximale de contraintes admissibles pour ledit élément de fonctionnement, et dans lequel l'unité centrale de contrôle (UC) est établit la caractéristique de fonctionnement type également en fonction du paramètre de fonctionnement limite associé à chaque élément de fonctionnement de la pluralité d'éléments de fonctionnement (CD, ML) ; et/ou
- l'information d'identification communiquée par le composant d'identification de l'au moins un élément de lestage (L1; L2) contient un paramètre de lestage limite qui est représentatif d'une valeur maximale de contraintes admissibles pour ledit au moins un élément de lestage (L1; L2), et dans lequel l'unité centrale de contrôle (UC) établit la caractéristique de fonctionnement type également en fonction du paramètre de lestage limite associé à l'au moins un élément de lestage (L1, L2).

15. Procédé de contrôle selon la revendication 13 ou 14, dans lequel l'étape (S7) de déduction de l'au moins une caractéristique de fonctionnement type comprend outre une sélection d'au moins une caractéristique de fonctionnement type parmi une pluralité de caractéristiques de fonctionnement type stockées dans une base informatique recensant une pluralité de configurations du dispositif de levage et de manutention (G) auxquelles sont associés des caractéristiques de fonctionnement type respectives.

16. Procédé de contrôle selon la revendication 15, dans lequel, si la configuration du dispositif de levage et de manutention (G) déduite lors de l'étape (S6) ne figure pas dans la base informatique, alors l'unité centrale de contrôle (UC) émet un signal d'alerte et bloque une mise en service du dispositif de levage et de manutention (G).

17. Procédé de contrôle selon l'une quelconque des revendications 13 à 16, dans lequel l'étape (S7) de déduction de l'au moins une caractéristique de fonctionnement type consiste à déduire une unique caractéristique de fonctionnement type adaptée à la configuration du dispositif de levage et de manutention (G).

18. Procédé de contrôle selon la revendication 17, comprenant une étape de sélection (S8) automatique par l'unité centrale de contrôle (UC) de la caractéristique de fonctionnement type pour induire une limitation d'un pilotage du dispositif de levage et de manutention (G) par un pilote.

19. Procédé de contrôle selon l'une quelconque des revendications 13 à 16, dans lequel l'étape (S7) de déduction de l'au moins une caractéristique de fonctionnement type consiste à déduire au moins deux caractéristiques de fonctionnement type adaptées à la configuration du dispositif de levage et de manutention,
ledit procédé de contrôle comprenant en outre les étapes suivantes :
• Affichage (S8') pour un pilote, en charge du pilotage du dispositif de levage et de manutention (G), des au moins deux caractéristiques de fonctionnement type ;
• Sélection (S9') par le pilote d'une caractéristique de fonctionnement type favorite parmi les au moins deux caractéristiques de fonctionnement type;
• Sélection (S10') par l'unité centrale de contrôle (UC) de la caractéristique de fonctionnement type favorite pour induire une limitation d'un pilotage du dispositif de levage et de manutention (G) par le pilote.

## Patentansprüche

1. Hebe- und Handhabungsvorrichtung (G), umfassend:
• eine Vielzahl von Strukturelementen (EMi, EFj, B, P, CF), die zusammengesetzt sind, um eine Struktur der Hebe- und Handhabungsvorrichtung zu bilden;
• eine Vielzahl von Betriebselementen (CD, ML), die von Strukturelementen getragen werden, die in der Vielzahl von Strukturelementen umfasst sind und gestaltet sind, um Bewegungen der Hebe- und Handhabungsvorrichtung oder einer Last bereitzustellen;
• mindestens ein Ballastelement (L1; L2), das an einem Strukturelement montiert ist;
• eine zentrale Steuereinheit (UC), die mindestens ein Betriebselement ansteuert, das in der Vielzahl von Betriebselementen (CD, ML) umfasst ist;
die Hebe- und Handhabungsvorrichtung (G) weiter umfasst:
• eine Vielzahl von Identifikationskomponenten (01-26), wobei jedes Strukturelement, das in der Vielzahl von Strukturelementen (EMi, EFj, B, P, CF) umfasst ist, mit einer Identifikationskomponente gekoppelt ist, die in der Vielzahl von Identifikationskomponenten (01-26) umfasst ist, wobei jedes Betriebselement, das in der Vielzahl von Betriebselementen (CD, ML) umfasst ist, mit einer Identifikationskomponente gekoppelt ist, die in der Vielzahl von Identifikationskomponenten (01-26) umfasst ist, und das mindestens eine Ballastelement (L1; L2) mit einer Identifikationskomponente gekoppelt ist, die in der Vielzahl von Identifikationskomponenten (01-26) umfasst ist, und jede Identifikationskomponente ein Funkkommunikationsmodul umfasst, das eine vordefinierte Funkkommunikationsreichweite (R) aufweist, um zumindest mit einer anderen Identifikationskomponente kommunizieren zu können; und
• eine Funkkommunikationsmastereinheit (UM), die mit der Vielzahl von Identifikationskomponenten (01-26) verbunden ist und dazu bestimmt ist, Identifikationsinformationen von jeder der Identifikationskomponenten, die in der Vielzahl von Identifikationskomponenten (01-26) umfasst sind, zu empfangen;
**dadurch gekennzeichnet, dass**
jede der Identifikationskomponenten (01-26) ausgelegt ist, um der Funkkommunikationsmastereinheit (UM) die Identifikationsinformationen gemäß einem Nah-zu-Nah-Kommunikationsprotokoll zwischen Identifikationskomponenten zu übertragen, die sich in ihren jeweiligen Funkkommunikationsreichweiten (R) befinden;
**und dadurch, dass** die zentrale Steuereinheit (UC) in Verbindung mit der Funkkommunikationsmastereinheit (UM) steht und konfiguriert ist, um:
• eine Lokalisierung jedes Strukturelements, das in der Vielzahl von Strukturelementen (EMi, EFj, B, P, CF) umfasst ist, jedes Betriebselements, das in der Vielzahl von Betriebselementen (CD, ML) umfasst ist, und das mindestens eine Ballastelement (L1; L2) in Abhängigkeit von den Identifikationsinformationen zu bestimmen, die von jeder der Identifikationskomponenten (01-26) an die Funkmastereinheit (UM) übertragen werden, und
• daraus eine Konfiguration der Hebe- und Handhabungsvorrichtung (G) und anschließend mindestens eine typische Betriebseigenschaft der Hebe- und Handhabungsvorrichtung (G), die der Konfiguration zugeordnet ist, abzuleiten.

2. Hebe- und Handhabungsvorrichtung (G) nach Anspruch 1, wobei die von der Identifikationskomponente jedes Strukturelements der Vielzahl von Strukturelementen (EMi, EFj, B, P, CF) kommunizierten Identifikationsinformationen einen Strukturparameter enthält, der repräsentativ für einen maximalen Wert zulässiger Spannungen für das Strukturelement ist, und wobei die zentrale Steuereinheit (UC) konfiguriert ist, um die typische Betriebseigenschaft auch in Abhängigkeit vom Strukturparameter zu erstellen, der jedem Strukturelement der Vielzahl von Strukturelementen (EMi, EFj, B, P, CF) zugeordnet ist.

3. Hebe- und Handhabungsvorrichtung (G) nach Anspruch 2, wobei der Strukturparameter ein für eine Steifigkeit des betroffenen Strukturelements repräsentativer Parameter ist.

4. Hebe- und Handhabungsvorrichtung (G) nach einem der Ansprüche 1 bis 3, wobei die von der Identifikationskomponente eines jeden Betriebselements der Vielzahl von Betriebselementen (CD, ML) kommunizierten Identifikationsinformationen einen Grenzbetriebsparameter enthält, der repräsentativ für einen Maximalwert zulässiger Spannungen für das Betriebselementen ist, beispielsweise bestimmt für statische, dynamische und Ermüdungslastfälle, und wobei die zentrale Steuereinheit (UC) konfiguriert ist, um die typische Betriebseigenschaft auch in Abhängigkeit von dem jedem Betriebselement der Vielzahl von Betriebselementen (CD, ML) zugeordneten Grenzbetriebsparameter zu erstellen.

5. Hebe- und Handhabungsvorrichtung (G) nach einem der Ansprüche 1 bis 4, wobei die von der Identifikationskomponente des mindestens einen Ballastelements (L1; L2) kommunizierte Identifikationsinformationen einen Grenzballastparameter enthalten, der repräsentativ für einen Maximalwert zulässiger Spannungen für das mindestens eine Ballastelement (L1; L2), beispielsweise bestimmt für statische, dynamische und Ermüdungslastfälle, und wobei die zentrale Steuereinheit (UC) konfiguriert ist, um die typische Betriebseigenschaft auch in Abhängigkeit vom Grenzballastparameter zu erstellen, der dem mindestens einen Ballastelement (L1, L2) zugeordnet ist.

6. Hebe- und Handhabungsvorrichtung (G) nach einem der vorstehenden Ansprüche, die einen Kran bezeichnet, und beispielsweise einen elementmontierten Turmkran oder einen automatisierten montierten Kran.

7. Hebe- und Handhabungsvorrichtung (G) nach einem der vorstehenden Ansprüche, wobei die Vielzahl von Strukturelementen (EMi, EFj, B, P, CF) aus der Liste ausgewählt werden, die Mastelemente (EMi), Auslegerelemente (EFi), einen Gegenausleger (CF), einen Drehzapfen (P), einen Teleskopkäfig, Verankerungsrahmen, eine Aufziehstruktur, oder eine Basis (B) umfasst.

8. Hebe- und Handhabungsvorrichtung (G) nach einem der vorstehenden Ansprüche, wobei die Vielzahl von Betriebselementen (CD, ML) aus der Liste ausgewählt ist, die Stellglieder und Antriebselemente (CD, ML) umfasst, und beispielsweise die Stellglieder mindestens eine Hubwinde und eine Verteilwinde umfassen, und beispielsweise die Antriebselemente mindestens einen Verteilwagen (CD) und ein Flaschenzugsystem (ML) umfassen.

9. Hebe- und Handhabungsvorrichtung (G) nach einem der vorstehenden Ansprüche, wobei die mindestens eine typische Betriebseigenschaft eine Größe oder eine Kurve bezeichnet, die repräsentativ für die Lastgrenzen der Hebe- und Handhabungsvorrichtung (G) ist, wie beispielsweise eine Lastkurve.

10. Hebe- und Handhabungsvorrichtung (G) nach einem der vorstehenden Ansprüche, wobei jede Identifikationskomponente (01-26) eine Steuervorrichtung umfasst, die mit einem Speicher verbunden ist, der die Identifikationsinformation enthält, die es ermöglicht, das Strukturelement (EMi, EFj, B, P, CF) oder das Betriebselement (CD, ML) oder das Ballastelement (L1; L2) zu identifizieren, das einer elektrischen Batterie zugeordnet ist, die dazu bestimmt ist, die Steuervorrichtung zu versorgen, und einem Funkkommunikationsmodul, das dazu bestimmt ist, für die Kommunikation zwischen den Identifikationskomponenten zu sorgen.

11. Hebe- und Handhabungsvorrichtung (G) nach einem der vorstehenden Ansprüche, wobei die Funkkommunikationsreichweite (R) des Funkkommunikationsmoduls einer jeden Identifikationskomponente kleiner oder gleich 30m ist.

12. Hebe- und Handhabungsvorrichtung (G) nach einem der vorstehenden Ansprüche, wobei die zentrale Steuerungseinheit (UC) konfiguriert ist, um eine Lokalisierung eines jeden in der Vielzahl von Strukturelementen (EMi, EFj, B, P, CF) umfassten Strukturelements, eines jeden in der Vielzahl von Betriebselementen (CD, ML) umfassten Betriebselements und des mindestens einen Ballastelements (L1; L2) in Abhängigkeit von einer Signalstärke, einer Signaldämpfung oder einer Reaktionszeit der von jeder der Identifikationskomponenten (01-26) übertragenen Identifikationsinformation zu bestimmen.

13. Steuerverfahren zur Steuerung eines Betriebs einer Hebe- und Handhabungsvorrichtung (G) nach einem der vorstehenden Ansprüche, wobei das Steuerverfahren die folgenden Schritte umfasst:
• Anbringen (S1) einer Identifikationskomponente an jedem der Strukturelemente, die in einer Vielzahl von Strukturelementen (EMi, EFj, B, P, CF) umfasst sind, an jedem der Betriebselemente, die in einer Vielzahl von Betriebselementen (CD, ML) umfasst sind, und an dem mindestens einen Ballastelement (L1; L2);
• Übertragen (S2) durch die an jedem der Strukturelemente (EMi, EFj, B, P, CF), an jedem der Betriebselemente (CD, ML) und an dem mindestens einen Ballastelement (L1; L2) angebrachte Identifikationskomponente, von Identifikationsinformationen an mindestens eine andere Identifikationskomponente (01-26), die in einer Funkkommunikationsreichweite (R) umfasst ist;
• Empfangen (S3) durch eine mit der Vielzahl von Identifikationskomponenten (01-26) verbundene Funkmastereinheit (UM) der Identifikationsinformation von jeder der Identifikationskomponenten, die in der Vielzahl von Identifikationskomponenten (01-26) umfasst sind, wobei die Identifikationsinformationen der Identifikationskomponenten gemäß einem Nah-zu-Nah-Protokoll zwischen Identifikationskomponenten (01-26), die sich in ihrer jeweiligen Funkkommunikationsreichweite (R) befinden, an die Funkkommunikationsmastereinheit (UM) übertragen werden;
• Übertragen (S4) der Identifikationsinformationen einer jeden der Identifikationskomponenten (01-26) durch die Funkkommunikationsmastereinheit (UM) an eine zentrale Steuereinheit (UC), die mindestens ein Betriebselement ansteuert, das in der Vielzahl von Betriebselementen (CD, ML) umfasst ist, und mit der Funkkommunikationsmastereinheit (UM) kommuniziert;
• Bestimmen (S5) durch die zentrale Steuereinheit (UC) einer Lokalisierung eines jeden Strukturelements, das in der Vielzahl von Strukturelementen (EMi, EFj, B, P, CF) umfasst ist, eines jeden Betriebselements, das in der Vielzahl von Betriebselementen (CD, ML) umfasst ist, und des mindestens einen Ballastelements (L1; L2) in Abhängigkeit von den von jeder der Identifikationskomponenten an die Funkkommunikationsmastereinheit (UM) übertragenen Identifikationsinformationen;
• Ableiten (S6) einer Konfiguration der Hebe- und Handhabungsvorrichtung (G) in Abhängigkeit von der Lokalisierung eines jeden in der Vielzahl von Strukturelementen umfassten Strukturelements (EMi, EFj, B, P, CF), der Lokalisierung eines jeden in der Vielzahl von Betriebselementen (CD, ML) umfassten Betriebselement, der Lokalisierung des mindestens einen Ballastelements (L1; L2) und der Identifikationsinformationen einer jeden der Identifikationskomponenten (01-26);
• Ableiten (S7) durch die zentrale Steuereinheit (UC) mindestens einer typischen Betriebseigenschaft der Hebe- und Handhabungsvorrichtung (G), die der Konfiguration der Hebe- und Handhabungsvorrichtung (G) angepasst ist.

14. Steuerverfahren nach Anspruch 13, wobei:
- die von der Identifikationskomponente eines jeden Strukturelements der Vielzahl von Strukturelementen (EMi, EFj, B, P, CF) kommunizierten Identifikationsinformationen einen Strukturparameter enthalten, der repräsentativ für einen Maximalwert zulässiger Spannungen für das Strukturelement ist, und wobei die zentrale Steuereinheit (UC) die typische Betriebseigenschaft auch in Abhängigkeit vom Strukturparameter erstellt, der jedem Strukturelement der Vielzahl von Strukturelementen (EMi, EFj, B, P, CF) zugeordnet ist; und/oder
- wobei die von der Identifikationskomponente eines jeden Betriebselements der Vielzahl von Betriebselementen (CD, ML) kommunizierten Identifikationsinformationen einen Grenzbetriebsparameter enthält, der repräsentativ für einen maximalen Wert zulässiger Spannungen für das Betriebselement ist, und wobei die zentrale Steuereinheit (UC) die typische Betriebseigenschaft auch in Abhängigkeit vom Grenzbetriebsparameter erstellt, der jedem Betriebselement der Vielzahl von Betriebselementen (CD, ML) zugeordnet ist; und/oder
- die von der Identifikationskomponente des mindestens einen Ballastelements (L1; L2) kommunizierten Identifikationsinformationen einen Grenzballastparameter enthalten, der repräsentativ für einen Maximalwert zulässiger Spannungen für das mindestens eine Ballastelement (L1; L2) ist, und wobei die zentrale Steuereinheit (UC) die typische Betriebseigenschaft auch in Abhängigkeit vom Grenzballastparameter, der dem mindestens einen Ballastelement (L1, L2) zugeordnet ist, erstellt.

15. Steuerverfahren nach Anspruch 13 oder 14, wobei der Schritt (S7) zum Ableiten der mindestens einen typischen Betriebseigenschaft weiter eine Auswahl von mindestens einer typischen Betriebseigenschaft aus einer Vielzahl von typischen Betriebseigenschaften umfasst, die in einer Computerbasis gespeichert sind, die eine Vielzahl von Konfigurationen der Hebe- und Handhabungsvorrichtung (G) verzeichnet, denen jeweilige typische Betriebseigenschaften zugeordnet sind.

16. Steuerverfahren nach Anspruch 15, wobei, wenn die in Schritt (S6) abgeleitete Konfiguration der Hebe- und Handhabungsvorrichtung (G) nicht in der Computerbasis aufscheint, die zentrale Steuereinheit (UC) ein Warnsignal ausgibt und eine Inbetriebnahme der Hebe- und Handhabungsvorrichtung (G) blockiert.

17. Steuerverfahren nach einem der Ansprüche 13 bis 16, wobei der Schritt (S7) zum Ableiten der mindestens einen typischen Betriebseigenschaft darin besteht, eine einzige typische Betriebseigenschaft abzuleiten, die der Konfiguration der Hebe- und Handhabungsvorrichtung (G) angepasst ist.

18. Steuerverfahren nach Anspruch 17, umfassend einen Schritt der automatischen Auswahl (S8) der typischen Betriebseigenschaft durch die zentrale Steuereinheit (UC), um eine Begrenzung einer Ansteuerung der Hebe- und Handhabungsvorrichtung (G) durch einen Treiber zu induzieren.

19. Steuerverfahren nach einem der Ansprüche 13 bis 16, wobei der Schritt (S7) zum Ableiten der mindestens einen typischen Betriebseigenschaft darin besteht, mindestens zwei typische Betriebseigenschaften abzuleiten, die der Konfiguration der Hebe- und Handhabungsvorrichtung angepasst sind,
wobei das Steuerverfahren weiter die folgende Schritte umfasst:
• Anzeigen (S8') für einen Treiber, der mit der Ansteuerung der Hebe- und Handhabungsvorrichtung (G) betraut ist, von mindestens zwei typischen Betriebseigenschaften;
• Auswählen (S9') durch den Treiber einer bevorzugten typischen Betriebseigenschaft aus den mindestens zwei typischen Betriebseigenschaften;
• Auswählen (S10') durch die zentrale Steuereinheit (UC) der bevorzugten typischen Betriebseigenschaft, um eine Begrenzung einer Ansteuerung der Hebe- und Handhabungseinrichtung (G) durch den Treiber zu induzieren.

## Claims

1. A lifting and handling device (G) comprising:
• a plurality of structural elements (EMi, EFj, B, P, CF) assembled to form a structure of said lifting and handling device;
• a plurality of operating elements (CD, ML) carried by structural elements comprised in the plurality of structural elements and designed to provide movements of the lifting and handling device or a load;
• at least one ballasting element (L1; L2) mounted on a structural element;
• a central monitoring unit (UC) controlling at least one operating element comprised in the plurality of operating elements (CD, ML);
said lifting and handling device (G) further comprises:
• a plurality of identification components (01-26), each structural element comprised in the plurality of structural elements (EMi, EFj, B, P, CF) being coupled to an identification component comprised in the plurality of components identification (01-26), each operating element comprised in the plurality of operating elements (CD, ML) being coupled to an identification component comprised in the plurality of identification components (01-26), and the at least one ballasting element (L1; L2) being coupled to an identification component comprised in the plurality of identification components (01-26), and each identification component comprising a radiocommunication module having a predefined radiocommunication range (R) in order to be able to communicate with at least one other identification component; and
• a radiocommunication master unit (UM) connected to the plurality of identification components (01-26) and intended to receive identification information from each of the identification components comprised in the plurality of the identification components (01-26);
**characterized in that** each of the identification components (01-26) being configured to transmit to the radiocommunication master unit (UM) the identification information according to a hop-by-hop communication protocol between identification components located within their radiocommunication ranges (R);
and **in that** said central monitoring unit (UC) is linked to the master radiocommunication unit (UM) and is configured to:
• determine a location of each structural element comprised in the plurality of structural elements (EMi, EFj, B, P, CF), of each operating element comprised in the plurality of operating elements (CD, ML), and of at least one ballasting element (L1; L2) as a function of the identification information transmitted by each of the identification components (01-26) to the master radiocommunication unit (UM), and
• deduce therefrom a configuration of the lifting and handling device (G) then at least one typical operating characteristic of said lifting and handling device (G) associated with said configuration.

2. The lifting and handling device (G) according to claim 1, wherein the identification information communicated by the identification component of each structural element of the plurality of structural elements (EMi, EFj, B, P, CF), contains a structural parameter which is representative of a maximum value of admissible stresses for said structural element, and wherein the central monitoring unit (UC) is configured to establish the typical operating characteristic also according to the structural parameter associated with each structural element of the plurality of structural elements (EMi, EFj, B, P, CF).

3. The lifting and handling device (G) according to claim 2, wherein the structural parameter is a parameter which is representative of a stiffness of the structural element concerned.

4. The lifting and handling device (G) according to any one of claims 1 to 3, wherein the identification information communicated by the identification component of each operating element of the plurality of operating elements (CD, ML), contains a limit operating parameter which is representative of a maximum value of admissible stresses for said operating element, for example determined for static, dynamic and fatigue load cases, and wherein the central monitoring unit (UC) is configured to establish the typical operating characteristic also according to the limit operating parameter associated with each operating element of the plurality of operating elements (CD, ML).

5. The lifting and handling device (G) according to any one of claims 1 to 4 wherein the identification information communicated by the identification component of the at least one ballasting element (L1; L2), contains a limit ballasting parameter which is representative of a maximum value of admissible stresses for said at least one ballasting element (L1; L2), for example determined for static, dynamic and fatigue load cases, and wherein the central monitoring unit (UC) is configured to establish the typical operating characteristic also according to the limit ballasting parameter associated with the at least one ballasting element (L1; L2).

6. The lifting and handling device (G) according to any of the preceding claims, which designates a crane, for example a block-erecting tower crane or a self-erecting crane.

7. The lifting and handling device (G) according to any of the preceding claims, wherein the plurality of structural elements (EMi, EFj, B, P, CF) are selected from the list comprising mast elements (EMi), jib elements (EFi), a counter-jib (CF), a pivot (P), a telescoping cage, anchor frames, a hoisting structure, or a base (B).

8. The lifting and handling device (G) according to to any of the preceding claims, wherein the plurality of operating elements (CD, ML) are selected from the list comprising actuators and drive elements (CD, ML), and for example the actuators comprise at least one lifting winch and one distribution winch, and the drive elements comprise at least one distribution trolley (CD) and a lifting block system (ML).

9. The lifting and handling device (G) according to any of the preceding claims, wherein the at least one typical operating characteristic is a quantity or a curve representative of the load limits of the lifting and handling device (G), such as for example a load curve.

10. The lifting and handling device (G) according to any of the preceding claims, wherein each identification component (01-26) comprises a monitoring device connected to a memory containing the identification information allowing to identify the structural element (EMi, EFj, B, P, CF) or the operating element (CD, ML) or the ballasting element (L1; L2) associated, to an electric battery intended to supply the monitoring device, and to a radiocommunication module intended to ensure communication between the identification components.

11. The lifting and handling device (G) according to any of the preceding claims, wherein the radiocommunication range (R) of the radiocommunication module of each identification component is less than or equal to 30 m.

12. The lifting and handling device (G) according to any of the preceding claims, wherein the central monitoring unit (UC) is configured to determine a location of each structural element comprised in the plurality of structural elements (EMi , EFj, B, P, CF), of each operating element comprised in the plurality of operating elements (CD, ML) and of at least one ballasting element (L1; L2) as a function of a power signal, a signal attenuation or a response time of the identification information transmitted by each of the identification components (01-26).

13. A monitoring method for monitoring the operation of a lifting and handling device (G) according to any of the preceding claims, said monitoring method comprising the following steps:
• an attaching (S1) of an identification component on each of the structural elements comprised in a plurality of structural elements (EMi, EFj, B, P, CF), on each of the operating elements comprised in a plurality of operating elements (CD, ML) and on at least one ballasting element (L1; L2);
• a transmitting (S2), by the identification component attached to each of the structural elements (EMi, EFj, B, P, CF), to each of the operating elements (CD, ML) and to the at least one ballasting element (L1; L2), of an identification information to at least one other identification component (01-26) comprised in a radiocommunication range (R);
• a receiving (S3), by a radiocommunication master unit (UM) connected to the plurality of identification components (01-26), of the identification information from each of the identification components comprised in the plurality of identification components (01-26), the identification information of the identification components being transmitted to the radiocommunication master unit (UM) according to a hop-by-hop communication protocol between identification components located within their radiocommunication ranges (R);
• a transmitting (S4) of the identification information of each of the identification components (01-26) by the radiocommunication master unit (UM) to a central monitoring unit (UC), said central monitoring unit (UC) controlling at least one operating element comprised in the plurality of operating elements (CD, ML), and communicating with the radiocommunication master unit (UM);
• a determining (S5), by the central monitoring unit (UC), of a location of each structural element comprised in the plurality of structural elements (EMi, EFj, B, P, CF), of each operating element comprised in the plurality of operating elements (CD, ML), and of the at least one ballasting element (L1; L2), as a function of the identification information transmitted by each of the identification components to the radiocommunication master unit (UM);
• a deducing (S6) of a configuration of the lifting and handling device (G) as a function of the location of each structural element comprised in the plurality of structural elements (EMi, EFj, B, P, CF), of the location of each operating element comprised in the plurality of operating elements (CD, ML), of the location of the at least one ballasting element (L1; L2) and of the identification information of each of the components identification (01-26);
• a deducing (S7), by the central monitoring unit (UC), of at least one typical operating characteristic of the lifting and handling device (G) suitable for the configuration of the lifting and handling device (G).

14. The monitoring method according to claim 13, wherein :
- the identification information communicated by the identification component of each structural element of the plurality of structural elements (EMi, EFj, B, P, CF), contains a structural parameter which is representative of a maximum value of admissible stresses for said structural element, and wherein the central monitoring unit (UC) establishes the typical operating characteristic also according to the structural parameter associated with each structural element of the plurality of structural elements (EMi, EFj, B, P, CF); and/or
- the identification information communicated by the identification component of each operating element of the plurality of operating elements (CD, ML), contains a limit operating parameter which is representative of a maximum value of admissible stresses for said operating element, and wherein the central monitoring unit (UC) establishes the typical operating characteristic also according to the limit operating parameter associated with each operating element of the plurality of operating elements (CD, ML); and/or
- the identification information communicated by the identification component of the at least one ballasting element (L1; L2), contains a limit ballasting parameter which is representative of a maximum value of admissible stresses for said at least one ballasting element (L1; L2), and wherein the central monitoring unit (UC) establishes the typical operating characteristic also according to the limit ballasting parameter associated with the at least one ballasting element (L1; L2).

15. The monitoring method according to claim 13 or 14, wherein the deducing (S7) of the at least one typical operating characteristic further comprises a selection of at least one typical operating characteristic from among a plurality of typical operating characteristics stored in a computer database listing a plurality of configurations of the lifting and handling device (G) with which respective typical operating characteristics are associated.

16. The monitoring method according to claim 15, wherein, if the configuration of the lifting and handling device (G) deduced during the deducing (S6) does not appear in the computer database, then the central monitoring unit (UC) emits a warning signal and blocks the commissioning of the lifting and handling device (G).

17. The monitoring method according to any one of claims 13 to 16, wherein the deducing (S7) consists in deducing a single typical operating characteristic adapted to the configuration of the lifting and handling device (G).

18. The monitoring method according to claim 17, comprising a automatically selecting step (S8) by the central monitoring unit (UC) of the typical operating characteristic to induce a limitation of a control of the lifting and handling device (G) by a pilot.

19. The monitoring method according to ant one of claims 13 to 16, wherein the deducing (S7) of the at least one typical operating characteristic consists in deducing at least two typical operating characteristics adapted to the configuration of the lifting and handling device,
said monitoring method further comprising the following steps of:
• a displaying (S8') for a pilot, in charge of control the lifting and handling device (G), of at least two typical operating characteristics;
• a selecting (S9') by the pilot of a preferred typical operating characteristic among the at least two typical operating characteristics;
• a selecting (S10') by the central monitoring unit (UC) of the preferred typical operating characteristic to induce a limitation of the control of the lifting and handling device (G) by the pilot.
